# EUROPEAN PATENT SPECIFICATION

(11) **EP 2 855 602 B1**
(45) Date of publication and mention of the grant of the patent: **23.08.2017**
(21) Application number: 13724584.1
(22) Date of filing: 23.05.2013
(51) Int. Cl.: C09D 5/00, C23F 15/00

(54) **LOW ENVIRONMENTAL IMPACT COMPOUND FILM FOR CORROSION PROTECTION**
KORROSIONSSCHUTZ-VERBUNDFOLIE MIT GERINGER AUSWIRKUNG AUF DIE UMWELT
FILM COMPOSÉ À FAIBLE INCIDENCE SUR L'ENVIRONNEMENT DESTINÉ À LA PROTECTION CONTRE LA CORROSION

(30) Priority: 01.06.2012 US 201261654186 P
(43) Date of publication of application: 08.04.2015
(73) Proprietor: Valsem Industries SAS, 60190 Lachelle (FR)
(72) Inventor: DAVIET, Jean-François, Fremont, California 94536 (US); BORDREZ, Denis, F-60880 Le Meux (FR)
(74) Representative: Prugneau, Philippe
(86) International application number: PCT/EP2013/060591
(87) International publication number: WO 2013/178525

(56) References cited:
- WO-A2-2006/069376
- DE-A1-102005 021 086
- KR-A- 20110 046 364
- US-A1- 2010 206 527
- US-A1- 2011 094 777

## Description

### Field of the invention

The present invention relates to a low environmental impact compound film for corrosion protection, in particular a hydrocarbon-based film comprising a load of metallic nanoparticles.

### Background of the invention

In the 1980s a packaging film for electronics components and system has been developed by Bell Laboratories. It was meant to provide effective protection against electrostatic discharges, which could destroy the sensitive electronics parts.

The film was in essence a polyethylene matrix film with a heavy load of Copper powder or particles, providing for a slight electrical conductivity of said film, and hence preventing stray electrostatic charge buildups from the environment to reach the sensitive active components.

After being used for some time in the field, it appeared that the Copper particles load also had a beneficial effect on corrosion of the packaged parts.

It was later figured out that the Copper particles inside the matrix did act like gettering sites for harmful corrosion-baring species such as H2S, SOx, Cl-, Na+, O3, etc., through various chemical and electro-chemical mechanisms.

These findings were subsequently fine-tuned by BELL LABS for developing corrosion protection polyethylene matrix film, as described in US4,944,916 and marketed as CORROSION INTERCEPT^{™}, rather than for shearing electrostatic discharges protection (mostly by having a much higher Copper powder concentration).

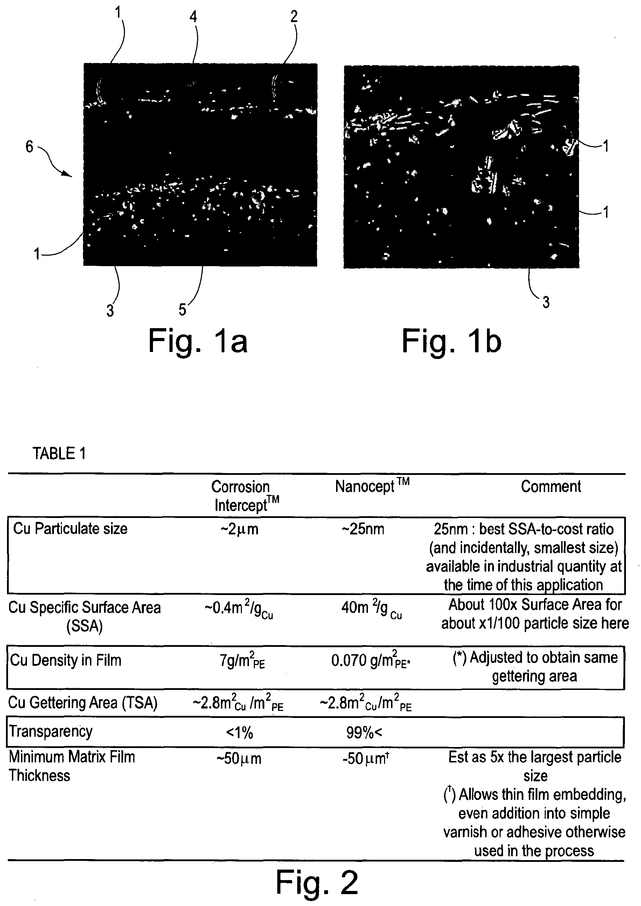

An in-depth analysis of a typical commercially available CORROSION INTERCEPT^{™} film has showed that the Copper particles load is in the order of 5% in weight of the total film, while the average particles size 1 is in the order of a few micrometers, as shown in figures 1 a and 1 b. The Copper particles 1 are distributed in two asymmetrical layers 2 and 3 close to the two surfaces 4 and 5 of the film 6, as shown in figure 1 a. In order to obtain the desired corrosion protection the thickness of a typical CORROSION INTERCEPT^{™} film being in the order of 150µm with a typical load of Copper particles of 7g/m² representing the density of the Copper particles in the film. The resulting gettering area of the CORROSION INTERCEPT^{™} film is about ≈ 2.8m²_{Cu}/m²_{film} as reported in the figure 2.

However in most cases, hydrocarbon product, as CORROSION INTERCEPT^{™} film, comprising high metal content cannot be readily recycled, inducing thereby a negative impact on the environment. This is a known issue in particular with traditional aluminum laminates used in industrial packaging. Moreover, such a high metal content makes the film essentially opaque, which is in many instances an undesirable side-effect.

As packaging films get thinner, lighter, and proportionally, stronger, for environmental reasons (now frequently below 100µm), the 7g/m² added weight in the CORROSION INTERCEPT^{™} film is a significant factor. Moreover, the maximum particles size imposes a minimum of ≈5x that size, for the matrix film thickness, for practical processing consideration. Thicker and hence, heavier matrix film means a more negative impact on the environment.

The aim of the invention is therefore to overcome the drawbacks and meet the expectations listed above.

### Summary of the invention

The invention takes advantage of the benefits of Copper and in general of metal particles gettering.

The invention therefore relates to a hydrocarbon-based film according to claim 1.

The hydrocarbon-based film may advantageously have the following features:
- the metallic nanoparticles have a total active metal surface area greater than 1m²_{SSA Metal}/m²_{Film};
- the metallic nanoparticles have an average size smaller than 100nm, preferably 25nm;
- the metallic nanoparticles are mixed in concentration lower than 10% with a varnish;
- the metallic nanoparticles are mixed in concentration lower than 10% with an adhesive;
- the film is of the family of polyethylene (PE), polyamid (PA), polyester (PET), polypropylene (PP), ethyl vinyl acetate (EVA), ethyl methyl acetate (EMA), cellulose or other vegetable-originated fiber or a combination thereof;
- the metallic nanoparticles contain at least, one of the metallic species among Copper, Iron, Silver, Aluminum, Tin, Antimony;
- the Copper nanoparticles are loaded at a density of about 0.070g/m²_{Film};
- the film being glued by lamination to another film such as aluminum foil or other polymeric material;
- it comprises one or more layers loaded with metallic nanoparticles so as to provide added functionalities such as increased mechanical strength, barrier to gases, barrier to volatile compounds, to light or other radiations, or to condensation;
- the film has a transparency greater than 99%;

The invention also relates to a degradation-resistant fabric woven from hydrocarbon-based film and a packaging material made from hydrocarbon-based film to protect good from corrosion or other biological degradation.

The idea of the invention is therefore to take advantage of metallic nanoparticles gettering. As gettering is primarly a surface phenomenon, the higher total active metal surface area (TSA) of a compound, here the hydrocarbon-based film, the greater is gettering effectiveness. As well as the TSA, the high specific surface area (SSA) of the metallic nanoparticles is advantageous in corrosion protection. Theoretically, the SSA of a particle grows like the third power of its particle size. Here, the high SSA of the metallic nanoparticles and high TSA allow advantageously reducing the density of said metallic nanoparticles in film while maintaining an effective corrosion protection. More particularly, this low density allows reducing thickness and increasing transparency of the film.

All of these features help reducing cost and environmental impact.

### Brief presentation of the drawings

The present invention will be better understood and other advantages will become apparent upon reading the following description and the accompanying drawings in which:
- figure 1 a illustrates an overview of the whole CORROSION INTERCEPT^{™} film cross-section of the prior art, and the figure 1 b illustrates a zoom-in of said film cross-section ; both figure 1 a and 1 b are Scanning Electron Microscope (SEM) Micrographs ;
- figure 2 is a comparative table between CORROSION INTERCEPT^{™} film and a film obtained by one embodiment of the present invention ;

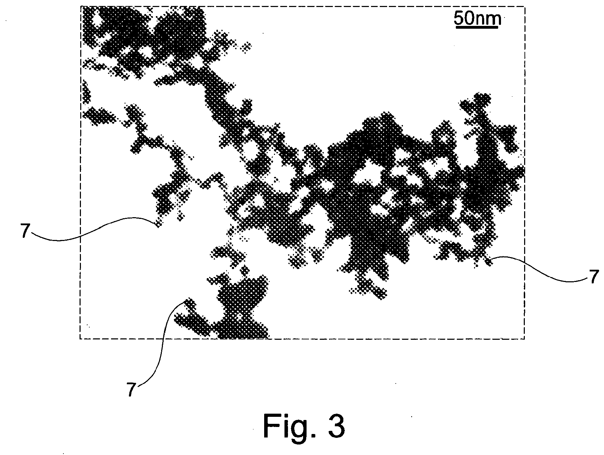

- figure 3 is a Micrograph showing Copper nanoparticles of the present invention with ultra-high SSA.

### Description

The invention relates to a hydrocarbon-based film for protection against harmful corrosion-baring contaminants such as H₂S, SOₓ, Cl⁻, Na+, O³. The protection is especially due to a load of metallic nanoparticles in said film. The film is used for example in packaging material to protect packaged goods from corrosion. The film is also used in biocidical activity (e.g. antimicrobial and anti-fungal) or as a medium for printed documents. In particular, the hydrocarbon-based film of the present invention can also be slitted and woven into a degradation-resistant fabric.

Without limiting the scope of the invention, the hydrocarbon-based film is of the family of polyethylene, polyamid, polyester, polypropylene, ethyl vinyl acetate, ethyl methyl acetate, cellulose or other vegetable-originated fiber or a combination thereof.

Here, the metallic nanoparticles contain at least, one of the metallic species among Copper, Iron, Silver, Aluminum, Tin, Antimony.

The nanoparticles are particularly small as they have a size smaller than 100nm and preferably around 25nm, as shown in the figure 2 by Copper nanoparticules indicated by reference numeral 7.

The metallic nanoparticles further have a specific surface area (SSA) higher than 10m²/g, preferably 40m²/g. In the present invention the term SSA should be understood as the total surface area of a material per unit of mass.

In the present invention, the metallic nanoparticles have a total active metal surface area greater than 1m²_{SSA Metal}/m²_{Film} which means that for 1m² of hydrocarbon-based film, the specific surface area of the metallic nanoparticles is 1m².

By way of example, in order to obtain a corrosion protection with a gettering area of 2,8m²_{Cu}/m²_{film}, it is used Copper nanoparticles having 25nm size with a specific surface area of 40m²/g_{Cu}. It results a low density of Cu (0.070g/m²) which directly acts on the transparency of the film, here in the present invention greater than 99%, as shown in the figure 2.

In one embodiment of the present invention, the metallic nanoparticles are mixed in concentration lower than 10% with a varnish. The varnish is applied in a layer of less than 5µm onto a substrate of said film.

In another embodiment of the present invention, the metallic nanoparticles are mixed in concentration lower than 10% with an adhesive. As well as varnish, adhesive is applied in a layer of less than 5µm onto a substrate of said film.

In another embodiment of the invention, in case of harmful or fire-prone nanoparticles, they are first embedded into fire and health safe extrudable pellets in a process called masterbaching, for further processing onto regular industrial polymer processing lines.

In another embodiment of the invention, the hydrocarbon-based film is glued by lamination to another film such as other polymeric material or aluminum foil. In another embodiment of the invention the hydrocarbon-based film comprises one or more layers loaded with metallic nanoparticles. Without limiting the scope of the invention, one or more layer of nanoparticles are added to the compound for increased technical or economical effectiveness.

All embodiments of the present invention obviously can be combined with each other to improve corrosion protection while reducing the environmental impact.

It is obvious that the present invention should not be limited to the foregoing description of the embodiments thereof, which may be modified without departing from the scope of the invention.

## Claims

1. Hydrocarbon-based flexible packaging film with corrosion protection properties, **characterized in that** it has a substrate surface on which is applied a varnish layer or an adhesive layer of less than 5µm loaded with metallic nanoparticles *per se* acting as a gettering surface for corrosion-baring contaminants and **in that** said metallic nanoparticles have a specific surface area higher than 10m²/g and preferably 40m²/g.

2. Hydrocarbon-based packaging film according to claim 1 wherein said metallic nanoparticles have a total active metal surface area greater than 1m²_{SSA Metal}/m²_{Film}.

3. Hydrocarbon-based packaging film according to claim 1 wherein said metallic nanoparticles have an average size smaller than 100nm, preferably 25nm.

4. Hydrocarbon-based packaging film according to claim 1 wherein said metallic nanoparticles are mixed in concentration lower than 10% with a varnish.

5. Hydrocarbon-based packaging film according to claim 1 wherein said metallic nanoparticles are mixed in concentration lower than 10% with an adhesive.

6. Hydrocarbon-based packaging film according to claim 1 wherein is the film is of the family of polyethylene, polyamid, polyester, polypropylene, ethyl vinyl acetate, ethyl methyl acetate, cellulose or other vegetable-originated fiber or a combination thereof.

7. Hydrocarbon-based packaging film according to claim 1 wherein the metallic nanoparticles contain at least, one of the metallic species among Copper, Iron, Silver, Aluminum, Tin, Antimony.

8. Hydrocarbon-based packaging film according to claim 7, wherein the Copper nanoparticles are loaded at a density of about 0.070g/m²_{Film}.

9. Hydrocarbon-based packaging film according to claim 1 wherein said film being glued by lamination to another film such as aluminum foil or other polymeric material.

10. Hydrocarbon-based packaging film according to claim 1 comprising one or more layers loaded with metallic nanoparticles.

11. Hydrocarbon-based packaging film according to claim 1, wherein the film has a transparency greater than 99%.

12. Degradation-resistant fabric woven, characterized it comprises a hydrocarbon-based packaging film according to claim 1.

## Patentansprüche

1. Flexible Verpackungsfolie auf Kohlenwasserstoffbasis mit Korrosionsschutzeigenschaften, **dadurch gekennzeichnet, dass** sie eine Trägeroberfläche aufweist, auf die eine Lackschicht oder eine Klebstoffschicht von weniger als 5µm aufgebracht ist, die mit metallischen Nanopartikeln beladen ist, welche *an sich* als Getterfläche für korrosionsschützende Verunreinigungen wirken und dadurch, dass die metallischen Nanopartikel eine spezifische Oberfläche von mehr als 10 m²/g und vorzugsweise 40 m²/g aufweisen.

2. Verpackungsfolie auf Kohlenwasserstoffbasis nach Anspruch 1, **dadurch gekennzeichnet, dass** die metallischen Nanopartikel einen gesamten aktiven Metalloberflächenbereich von mehr als 1m²_{SSA Metall}/m²_{Folie} aufweisen.

3. Verpackungsfolie auf Kohlenwasserstoffbasis nach Anspruch 1, wobei die metallischen Nanopartikel eine mittlere Größe von weniger als 100 nm, vorzugsweise 25 nm aufweisen.

4. Verpackungsfolie auf Kohlenwasserstoffbasis nach Anspruch 1, wobei die metallischen Nanopartikel in einer Konzentration von weniger als 10% mit einem Lack gemischt sind.

5. Verpackungsfolie auf Kohlenwasserstoffbasis nach Anspruch 1, wobei die metallischen Nanopartikel in einer Konzentration von weniger als 10% mit einem Klebstoff gemischt sind.

6. Verpackungsfolie auf Kohlenwasserstoffbasis nach Anspruch 1, wobei die Folie aus der Familie von Polyethylen, Polyamid, Polyester, Polypropylen, Ethylvinylacetat, Ethylmethylacetat, Cellulose oder einer anderen Faser pflanzlichen Ursprungs oder einer Kombination davon besteht.

7. Verpackungsfolie auf Kohlenwasserstoffbasis nach Anspruch 1, wobei die metallischen Nanopartikel mindestens eine der Metallarten von Kupfer, Eisen, Silber, Aluminium, Zinn, Antimon enthalten.

8. Verpackungsfolie auf Kohlenwasserstoffbasis nach Anspruch 7, wobei die Kupfer-Nanopartikel mit einer Dichte von etwa 0,070 g/m²_{Folie} beladen sind.

9. Verpackungsfolie auf Kohlenwasserstoffbasis nach Anspruch 1, wobei die Folie durch Laminieren auf einen anderen Film, wie etwa Aluminiumfolie oder ein anderes Polymermaterial, geklebt ist.

10. Verpackungsfolie auf Kohlenwasserstoffbasis nach Anspruch 1, die eine oder mehrere Schichten, die mit metallischen Nanopartikeln beladen sind, umfasst.

11. Verpackungsfolie auf Kohlenwasserstoffbasis nach Anspruch 1, wobei die Folie eine Transparenz von mehr als 99% aufweist.

12. Degradationsbeständiges Gewebe, **dadurch gekennzeichnet, dass** es eine Verpackungsfolie auf Kohlenwasserstoffbasis nach Anspruch 1 umfasst.

## Revendications

1. Film d'emballage flexible hydrocarboné avec des propriétés de protection contre la corrosion, **caractérisé en ce qu'**il présente une surface de substrat sur laquelle est appliquée une couche de vernis ou une couche adhésive inférieure à 5 µm chargée de nanoparticules métalliques agissant elles-mêmes en tant que surface de piégeage pour des contaminants de corrosion et **en ce que** lesdites nanoparticules métalliques ont une zone de surface spécifique supérieure à 10m²/g et de préférence 40 m²/g.

2. Film d'emballage hydrocarboné selon la revendication 1, dans lequel lesdites nanoparticules métalliques ont une surface totale de surface métallique active supérieure à 1m²_{SSA Metal}/m²_{Film.}

3. Film d'emballage hydrocarboné selon la revendication 1, dans lequel lesdites nanoparticules métalliques ont une taille moyenne inférieure à 100 nm, de préférence 25 nm.

4. Film d'emballage hydrocarboné selon la revendication 1, dans lequel lesdites nanoparticules métalliques sont mélangées en concentration inférieure à 10% avec un vernis.

5. Film d'emballage hydrocarboné selon la revendication 1, dans lequel lesdites nanoparticules métalliques sont mélangées en une concentration inférieure à 10% avec un adhésif.

6. Film d'emballage hydrocarboné selon la revendication 1, dans lequel le film est de la famille du polyéthylène, du polyamide, du polyester, du polypropylène, de l'acétate d'éthyle et de vinyle, de l'acétate de méthyle et d'éthyle, de la cellulose ou d'autres fibres d'origines végétales ou une combinaison de ceux-ci.

7. Film d'emballage hydrocarboné selon la revendication 1, dans lequel les nanoparticules métalliques contiennent au moins une des espèces métalliques parmi le cuivre, le fer, l'argent, l'aluminium, l'étain et l'antimoine.

8. Film d'emballage hydrocarboné selon la revendication 7, dans lequel les nanoparticules de cuivre sont chargées à une densité d'environ 0,070 g/m²_{Film}.

9. Film d'emballage hydrocarboné selon la revendication 1, dans lequel ledit film est collé par lamination à un autre film tel qu'une feuille d'aluminium ou un autre matériau polymère.

10. Film d'emballage hydrocarboné selon la revendication 1, comprenant une ou plusieurs couches chargées avec des nanoparticules métalliques.

11. Film d'emballage hydrocarboné selon la revendication 1, dans lequel le film a une transparence supérieure à 99%.

12. Tissu tissé résistant à la dégradation, **caractérisé en ce qu'**il comprend un film d'emballage hydrocarboné selon la revendication 1.
